# EUROPEAN PATENT SPECIFICATION

(11) **EP 2 066 044 B1**
(45) Date of publication and mention of the grant of the patent: **10.02.2010**
(21) Application number: 07291421.1
(22) Date of filing: 29.11.2007
(51) Int. Cl.: H04B 10/155

(54) **Transmitter for a fiber optics multicarrier modulation transmission system using multiple polarizations**
Sender für ein Glasfaser-Mehrträger-Modulationssendesystem mit mehreren Polarisierungen
Transmetteur pour système de transmission à modulation multiporteur de fibres optiques utilisant des polarisations multiples

(43) Date of publication of application: 03.06.2009
(73) Proprietor: Alcatel Lucent, 75008 Paris (FR)
(72) Inventor: Franz, Bernd, 74336 Brackenheim (DE)
(74) Representative: Schmidt, Werner Karl

(56) References cited:
- US-A1- 2005 271 387
- US-B1- 6 201 785
- SANDER L JANSEN ET AL: "16x52.5-Gb/s, 50-GHz spaced, POLMUX-CO-OFDM transmission over 4,160 km of SSMF enabled by MIMO processing" PROCEEDINGS OF THE EUROPEAN CONFERENCE ON OPTICAL COMMUNICATION, XX, XX, 20 September 2007 (2007-09-20), page 2pp, XP009099251
- ETIENNE ROCHAT ET AL: "Polarisation and wavelength division multiplexing at 1.55um for bandwidth enhancement of multimode fibre based access networks" OPTICS EXPRESS, OPTICAL SOCIETY OF AMERICA, WASHINGTON, DC,, US, vol. 12, no. 10, 17 May 2004 (2004-05-17), pages 2280-2292, XP009099254 ISSN: 1094-4087

## Description

The invention relates to a transmitter for a fiber optics multicarrier modulation transmission system, in particular for an OFDM system (orthogonal frequency-division multiplexing), and to a system comprising such transmitter. Moreover, the invention relates to a fiber optics multicarrier modulation signal and a method for generating such optical multicarrier modulation signal.

In a multicarrier modulation transmission system the bandwidth for transmission is split into a multiplicity of subchannels (e.g., 256 subchannels) instead of using a single broadband channel. Each subchannel is associated with a subcarrier at the mid-frequency of the subchannel, with each subcarrier being modulated by a conventional modulation scheme (e.g., quadrature phase-shift keying) at a low symbol rate instead of a high symbol rate in single carrier modulation systems. By using a high number of subcarriers, the frequency response characteristics of each subchannel becomes nearly ideal.

In case of selecting the frequency spacing of adjacent subcarriers to be an integer multiple of the symbol rate 1/T of each subchannel, the subcarriers become orthogonal and ideally adjacent modulated subcarriers do not interfere. Such multicarrier modulation scheme is called orthogonal frequency-division multiplexing (OFDM).

An OFDM signal is typically generated by means of an inverse fast-Fourier transform: Parallel data streams are typically mapped to real-valued or complex-valued parallel symbol streams using a specific modulation scheme (e.g., phase-shift keying - PSK, or quadrature amplitude modulation - QAM) and then fed to a unit for performing an inverse fast Fourier-transform resulting in a set of real-valued or complex-valued time-domain samples.

By using multicarrier modulation, in particular OFDM, for fiber optics communications the symbol rate can be reduced, thus increasing tolerance to chromatic dispersion and polarization mode dispersion of the optical fiber. Therefore, the transmission span can be increased.

In the time domain, an optical multicarrier modulation signal, in particular an optical OFDM signal has occasionally a high amplitude, resulting in a high peak-to-average power ratio (PAR). Such high amplitude occurs when the signals of the subchannels add constructively in phase. In such situation the fiber may be driven in the nonlinear range, resulting in degradation of the optical signal due to nonlinearity effects.

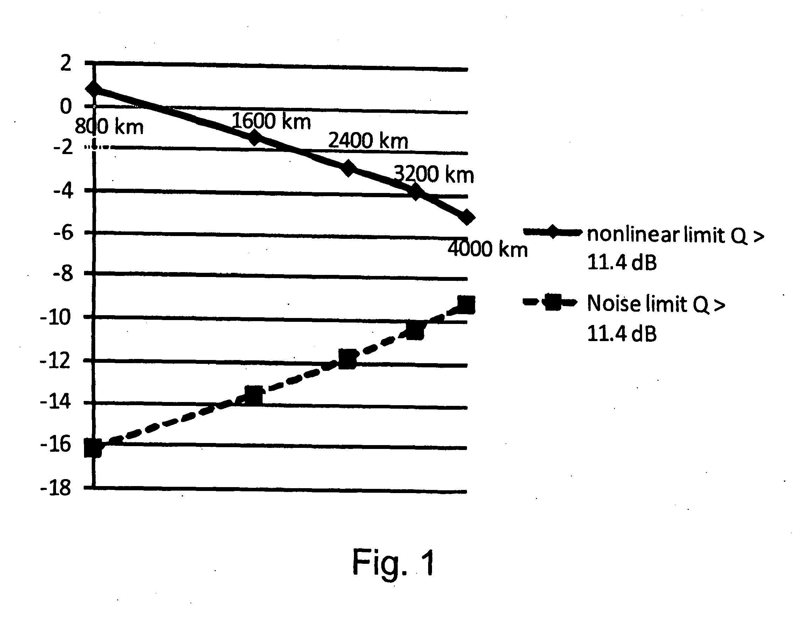

The document "Orthogonal Frequency Division Multiplexing for Adaptive Dispersion Compensation in Long Haul WDM Systems", A. J. Lowery et al., Post-deadline Papers, Technical Digest of Optical Fiber Communications (OFC/NFOEC 2006), PDP39, March 9th 2006, Anaheim discloses an optical OFDM transmission system. In the document, minimum and maximum fiber launch powers in dependency of the transmission span length which are required to achieve a value of more than 11.4 dB for the parameter Q are disclosed. The parameter Q corresponds to the signal-to-noise-ratio and is directly related to the bit error rate (BER). The given numbers for a single WDM channel are reproduced in Fig. 1, with the horizontal axis describing the transmission span length and the vertical axis describing the power per channel in dBm. The minimum launch powers correspond to a lower noise limit and the maximum launch powers correspond to an upper nonlinear limit. A system with Q > 11.4 dB has to operate between these limits. The nonlinear limit decreases approximately 2 dB per doubling of the fiber length and the noise limit increases approximately with 2.7 dB per doubling of the fiber length. As illustrated in Fig. 1, both the nonlinear limit and the noise restrict the maximum transmission span. Due to the nonlinear limit it is not possible to increase the transmission span length and/or the signal quality by increasing the launch power when reaching the nonlinear limit (or even before reaching the nonlinear limit). Thus, there is a need to push the nonlinear limit towards higher launch powers.

Prior art document US 2005/0271387 A1 discloses a transmitter for a fiber optics OFDM transmission system, with the transmitter performing spectral shaping by using different magnitudes for the subcarriers, e.g., lower magnitudes near the center of the transmission band than near the edges of the band. This spectral shaping can reduce performance degradation by optical nonlinearities and higher input powers may be launched. The document also mentions the concept of polarization multiplexing.

The document "16x52.5-Gb/s, 50-GHz spaced, POLMUX-CO-OFDM transmission over 4,160 km of SSMF enabled by MIMO processing", Sander L. Jansen et al., Proceedings of the European Conference on Optical Communication, September 20, 2007, page 2pp, relates to a polarization multiplexing optical OFDM system with wavelength division multiplexing (WDM). The OFDM system is capable of transmitting 52.5 Gb/s on each of 16 WDM channels, i.e. in total 16·52.5 Gb/s. Each of the 16 WDM channels is associated with one laser diode out of 16 laser diodes. The 16 WDM channels are grouped in odd channels and even channels. The outputs of the odd channel laser diodes are modulated by a first modulator structure using two MZ (Mach Zehnder) modulators in parallel. Each of the two MZ modulators is used for modulating one polarization. Similarly, the outputs of the even channel laser diodes are modulated by a second modulator structure using two MZ modulators in parallel. Each MZ modulator receives two OFDM signals for upconversion, one at an intermediate frequency of 11.5 GHz and one at an intermediate frequency of 18.7 GHz. Each OFDM signal has a data rate of 13.1 Gb/s. Thus, each WDM channel carries 4 OFDM signals (2 OFDM signals per each of the two polarizations) and thus transports 4·13.1 Gb/s ≈ 52.5 Gb/s.

Prior art document US 6,201,785 B1 discloses a wireless transmitter. In the transmitter an inverse fast Fourier transform is carried out for generating N channels, e.g. 1024 channels in 72 microseconds. In order to limit the passband (which in case of 1024 channels must be 16 MHz) it is proposed to split the channels into two parts to transmit the first 512 channels over a first transmitter path associated with a first polarization and to transmit the second 512 channels over a second transmitter path associated with a second polarization. In a transposition circuit the second 512 channels are transposed in the frequency band of the first 512 channels such that the two signals (i.e. the first 512 channels and the second 512 channels) are transmitted in the same frequency band.

It is an object of the present invention to provide an alternative transmitter for a fiber optics multicarrier modulation transmission system, in particular for an OFDM system, with the transmitter enabling an increase of the nonlinear limit for increasing the transmission span length and/or the signal quality. It is still a further object to provide a corresponding transmission system, a fiber optics multicarrier modulation signal and a method for generating such signal enabling such increase of the nonlinear limit.

These objects are solved by a transmitter, a transmission system, a fiber optics multicarrier modulation signal and a method according to the independent claims. The dependent claims refer to preferred embodiments of the invention.

According to an aspect of the invention, a transmitter is configured for a fiber optics OFDM transmission system. The transmitter is further configured to generate an optical OFDM signal, each subcarrier of the OFDM signal being at a different frequency and associated with a different frequency subchannel at least some of the subcarriers being modulated. The subcarriers are orthogonal to each other in the frequency domain. Each subcarrier in a first group of the subcarriers has a first polarization and each subcarrier in a second group of the subcarriers has a second polarization different from the first polarization.

Therefore, by splitting the optical OFDM signal in at least two parts and transmitting these parts with different polarizations, the power for driving the fiber in the nonlinear range is increased, resulting in an increase of the nonlinear limit. This is due to the fact that the overall signal is a vector superposition of all subcarriers according to the subcarriers' polarization. Thus, the transmission span length and/or the signal quality can be increased by increasing the launch power without reaching the nonlinear limit. Also, the system margin increases.

Furthermore, it is not necessary to adapt the receiver to the usage of different polarizations, i.e., the receiver may be a conventional receiver for an optical multicarrier modulation system.

It should be noted that not necessarily all of these different subcarriers are modulated. Optionally, one or of more of the different subcarriers may be not modulated, e.g., for increasing the spacing between the modulated subcarriers.

An OFDM transmitter has the advantage that adjacent subcarriers ideally do not interfere and thus the spacing between adjacent subcarriers may be decreased resulting in an increase of the number of subcarriers in a fixed band.

Typically, the transmitter may use exactly two different polarizations. However, the invention is not limited to a total number of two polarizations.

Advantageously, the first and second polarizations are orthogonal polarizations. In this case the launch power for driving the fiber in the nonlinear range is further increased, corresponding to a further increase of the nonlinear limit.

Preferably, in case of using two polarizations, in particular two orthogonal polarizations, the polarization of the subcarriers alternate with increasing frequency of the optical OFDM signal. E.g., in case of a total number of n subcarriers, the odd numbered subcarriers 1, 3, 5, 7, ..., n-1 have the first polarization, whereas the even numbered subcarriers 2, 4, 6, 8, ..., n have the second polarization or vice versa, with the subcarriers being numbered according to the order in the spectrum.

Alternatively, the frequencies of the first group of the subcarriers may be lower than the frequencies of the second group of the subcarriers or vice versa. E.g., the subcarriers 1, 2, 3, 4, ..., n₁ have the first polarization, whereas the subcarriers n₁+1, n₁+2, ..., n have the second polarization.

The first and second polarizations may be obtained by using a TE wave mode (transverse electrical - having basically no electrical field in the direction of propagation) and a corresponding TM wave mode (transverse magnetic - having basically no magnetic field in the direction of propagation) or vice versa. The TE and TM polarizations may be shifted along the fiber.

The OFDM transmitter preferably comprises means for performing an inverse fast Fourier-transform.

Such means for performing an inverse fast Fourier-transform may be configured to generate a plurality of parallel (real-valued or complex-valued) digital signals, with a first group of the parallel digital signals being assigned to the first group of the subcarriers and a second group of the parallel digital signals being assigned to the second group of the subcarriers. Further, first means for generating a first analog signal based on the first group of the parallel digital signals and second means for generating a second analog signal based on the second group of the parallel digital signal may be provided.

Preferably, the transmitter comprises two electrical-to-optical converters for generating a first optical signal and a second optical signal, respectively. Advantageously, the first optical signal has the first polarization, whereas the second optical signal has the second polarization. These signals may be combined by a combiner. Preferably, such electrical-to-optical converters may receive the first and second analog signals as generated by the first and second means, respectively.

It should be noted that basically the above mentioned aspects of the invention can be arbitrarily combined. Furthermore, it should be noted that the disclosure of the invention also covers other claim combinations than the claim combinations which are explicitly given by the back references in the dependent claims, i.e., the claims can be basically combined in any order.

According to a further aspect of the invention, a transmission system comprises a transmitter as discussed above, i.e., an OFDM transmitter.

According to another aspect of the invention, in a fiber optics OFDM signal, each subcarrier of the OFDM signal is at a different frequency and is associated with a different frequency subchannel. At least some of the subchannels are modulated. The subcarriers are orthogonal to each other in the frequency domain. Each subcarrier in a first group of the subcarriers has a first polarization and each subcarrier in a second group of the subcarriers has a second polarization different from the first polarization.

According to still another aspect of the invention, a method is provided for generating a fiber optics OFDM signal, wherein each subcarrier of the OFDM signal has at a different frequency and is associated with a different frequency subchannel. At least some of the subcarriers are modulated. The subcarriers are orthogonal to each other in the frequency domain. The method generates a signal, wherein each subcarrier in a first group of the subcarriers has a first polarization and each subcarrier in a second group of the subcarriers has a second polarization different from the first polarization.

The remarks related to the transmitter and its preferred embodiments as discussed above and given in the dependent claims are also applicable to the transmission system, the optical OFDM signal and the signal generation method according to the further aspects of the invention.

The invention is explained below in an exemplary manner with reference to the accompanying drawings, wherein
- Fig. 1: illustrates the minimum and maximum fiber launch powers in dependency of the span length for achieving values of more than 11.4 dB for Q;
- Fig. 2: illustrates a conventional OFDM fiber optics transmission system without using different polarizations for the subcarriers;
- Fig. 3: illustrates a first embodiment of a transmitter for an OFDM fiber optics transmission system according to the invention; and
- Fig. 4: illustrates a second embodiment of a transmitter for an OFDM fiber optics transmission system according to the invention.

The lower noise limit and the upper nonlinear limit as given in Fig. 1 were already discussed above.

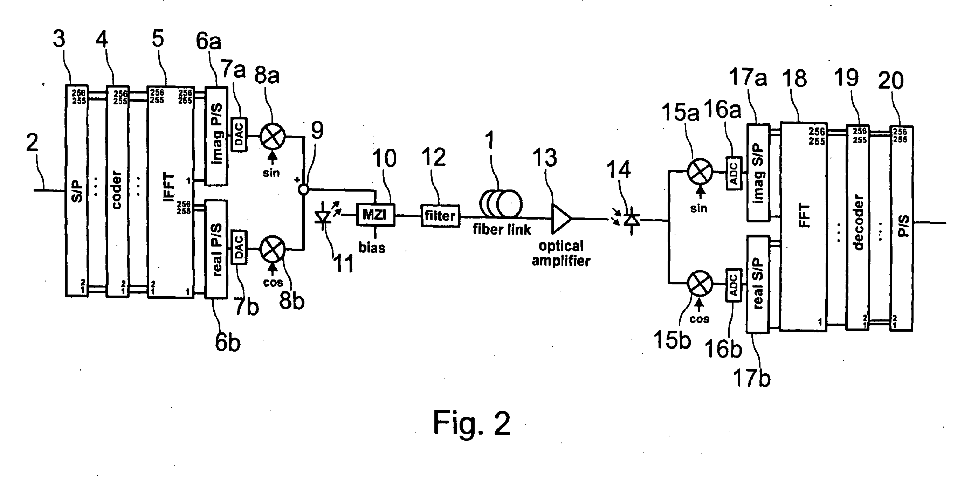

Fig. 2 illustrates a conventional OFDM fiber optics transmission system without using different polarizations for the subcarriers. The transmission system comprises a transmitter and a receiver connected via an optical fiber link 1. The fiber link comprises one or more optical fibers and may also comprises further network elements (not shown), e.g. optical routers or signal regenerators.

The transmitter may receive a serial digital electrical signal (e.g., an electrical 10 Gb/s signal) via a serial connection 2. Alternatively, the transmitter may receive parallel data signals (not shown), e.g., 256 parallel data signals. In case of a serial digital electrical signal, the serial signal is deserialized in a serial-to-parallel converter 3, e.g., in 256 parallel data streams as indicated in Fig. 2. The parallel data streams are fed to an encoder 4 for encoding a predefined number of data bits of a stream to a data symbol. E.g., the encoder 4 may be implemented as an encoder for PSK (e.g., QPSK - quadrature phase-shift keying, DQPSK - differential quadrature phase-shift keying) or for QAM (e.g., 16-QAM, 32-QAM or 64-QAM). E.g., in case of a QPSK-encoder, 2 bits per stream are encoded to a single symbol per stream. In case of using an on-off keying modulation scheme, the encoder 4 may be omitted. The encoded parallel symbols are then passed to an IFFT-unit 5 for performing an inverse fast Fourier-transform (IFFT) on the parallel encoded symbols, with each input being assigned to one of the orthogonal subcarriers. Optionally, some of the inputs of the IFFT-unit may be not modulated (not shown). In this case the corresponding subcarriers are not modulated.

The IFFT-unit produces a set of time-domain output samples. In dependence of the modulation format for the subcarriers, the output samples are real-valued or complex-valued. In case of QPSK or QAM, the output samples are complex-valued as shown in Fig. 2.

In case of complex-valued output samples the transmitter may further comprise a first 6a and a second 6b parallel-to-serial converter, with the first converter 6a converting the imaginary part of the complex-valued output samples into a serial digital signal corresponding to the real part of the transmitted signal and the second converter 6b converting the real part of the complex-valued output samples into a serial digital signal corresponding to the real part of the transmitted signal.

In case of real-valued output samples, only a single parallel-to-serial converter is needed.

The transmitter further comprises a first 7a and a second 7b analog-to-digital converter. Each of the serial digital signals is fed to a corresponding one of the two digital-to-analog converters 7a and 7b, with each one of the two converters 7a and 7b generating an analog signal. The analog output signal of the converter 7a corresponds to the imaginary part of the IFFT output symbols, whereas the analog output signal of the converter 7b corresponds to the real part of the IFFT output symbols.

In addition, the transmitter may comprise an electrical modulator, in particular a quadrature modulator for modulating an electrical carrier by the analog signals, with the modulator comprising a first 8a and a second 8b multiplier or mixer and a combiner or adder 9. The first mixer 8a multiplies the analog signal corresponding to the imaginary part by the quadrature component of the carrier wave (i.e., sinωt), whereas the second mixer 8b multiplies the analog signal corresponding to the inphase component of the carrier wave (i.e., cosωt). E.g., the frequency f = ω/(2π) of the electrical carrier may be selected to 10 GHz. The higher the frequency of the electrical carrier, the larger is the displacement of the two sidebands of the optical OFDM signal from the optical carrier.

It should be noted that the modulator may be also realized in the optical domain.

After combining both signal parts by the combiner 9, the overall signal is feed to an electrical-to-optical converter 10. The electrical-to-optical converter 10 may be realized as a modulator modulating the signal generated by an optical light source 11 (e.g., a laser or LED). The modulator 10 may be implemented as a Mach-Zehnder interferometer (MZI).

Optionally, an optical filter 12 is provided, which may remove one sideband and/or the optical carrier from the OFDM optical signal.

The receiver basically does a reverse processing of the received optical signal. Therefore, the receiver comprises an optical-to-electrical converter 14 (e.g., a photo diode) for converting the received optical signal into an analog electrical signal. Optionally, an optical amplifier 13, is connected upstream from the optical-to-electrical converter 14.

After conversion, the electrical analog signal is fed to a electrical demodulator, in particular to a quadrature demodulator for demodulating the electrical analog signal. The quadrature demodulator comprises a first 15a and a second 15b multiplier which in parallel receive the analog signal after splitting the signal. The first multiplier 15a multiplies the analog signal by the quadrature component of the carrier wave (i.e., sinωt), thereby recovering the imaginary part of the transmitted signal, whereas the second multiplier 15b multiplies the analog signal corresponding to the in-phase component of the carrier wave (i.e., cosωt), thereby recovering the real part of the transmitted signal.

The receiver further comprises two analog-to-digital converter 16a and 16b receiving the analog real and imaginary parts, respectively. The two parallel digital converted signals are fed into two serial-to-parallel converters 17a and 17b in order to generate parallel data. The parallel data streams are fed into a FFT-unit 18 for performing a fast Fourier-transform (FFT), which is reverse to the IFFT performed at the transmitter. The FFT-unit 18 recovers the symbols of the parallel data streams. In reverse to the encoder 4, a decoder 19 receives the symbols of the FFT-unit 17 and decodes the symbols. After parallel-to-serial conversion in a converter 20, the original serial signal as fed in the input 2 of the transmitter is recovered.

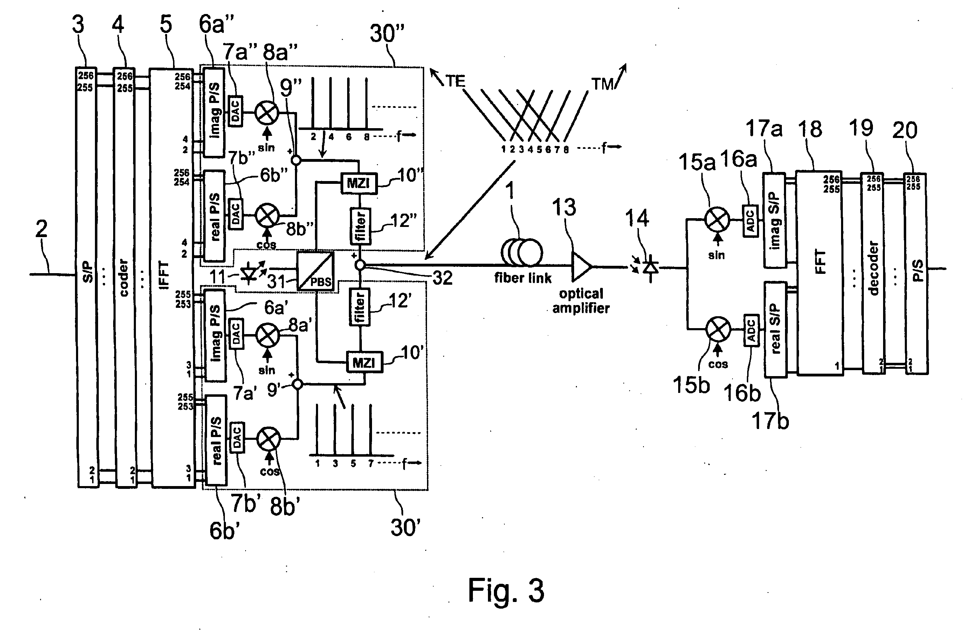

Fig. 3 illustrates a first embodiment of a transmitter for an OFDM fiber optics transmission system according to the invention. Figurative elements in Figs. 2 and 3 being denoted by the same reference signs are basically the same. Further, the above remarks related to the transmission system in Fig. 2 are also applicable to the transmission system unless otherwise noted.

The transmitter in Fig. 3 differs from the transmitter in Fig. 2 that the transmitter in Fig. 3 is configured to generate an optical OFDM signal, wherein each subcarrier in a first group of subcarriers (here: the odd numbered subcarriers 1, 3, 5, 7, ...) has a first polarization (here: TE mode) and each subcarrier in a second group of subcarriers (here: the even numbered subcarriers 2, 4, 6, 8 ...) has a second polarization (here: TM mode). Such optical signal having two orthogonal polarizations is illustrated in a simplified manner above the fiber link 1 in Fig. 3. As illustrated, the polarization of the subcarriers alternates with increasing frequency. The higher the subcarrier number, the higher is the frequency of the subcarrier in the transmission band.

The transmitter optionally comprises a serial-to-parallel converter 3 and a encoder 4, which are identically to the corresponding blocks in Fig. 2. In contast to the transmitter in Fig. 2, the parallel outputs of the IFFT-unit 5 providing the complex-valued (or, alternatively, real-valued) time-domain samples are assigned to two different parallel transmitter paths 30' and 30" corresponding to the different polarizations. The parallel outputs of the IFFT-unit 5 which are assigned to the first group of the subcarriers having the first polarization are fed into the first transmitter path 30', whereas the parallel outputs which are assigned to the second group of the subcarriers having the second polarization are into the second transmitter path 30".

In Fig. 3, the outputs assigned to the odd numbered subcarriers 1, 3, ..., 253, 255 (out of the total number of 256 OFDM subcarriers) are fed to the first transmitter path 30', whereas the outputs assigned to the even numbered subcarriers 2, 4, ..., 254, 256 are fed to the second transmitter path 30". Although in Fig. 3 the IFFT-unit 5 is illustrated as a single unit, the IFFT-unit 5 may be comprise two IFFT-blocks, with the first block being assigned to the first transmitter path 30', whereas the second block being assigned to the second transmitter path 30".

The first transmitter path 30' comprises two parallel-to-serial converters 6a' and 6b', which are basically identical to the parallel-to-serial converters 6a and 6b in Fig. 2, besides the fact that the number of processed subchannels is only half as many.

Further, the first transmitter path 30' comprises two analog-to-digital converters 7a' and 7a", which correspond to the two digital-to-analog converters 7a and 7b in Fig. 2, respectively, and generate two analog signals. The analog output signal of the converter 7a' corresponds to the imaginary part of the IFFT output signals assigned to the first group of subcarriers, i.e. the odd numbered carriers, whereas the analog output signal of the converter 7b' corresponds to the real part of the IFFT output signals assigned to these even numbered subcarriers.

The first transmission path 30' further comprises an electrical modulator, in particular a quadrature modulator for modulating an electrical carrier by the analog signals corresponding to the real and imaginary parts. The modulator comprises a first 8a' and a second 8b' multiplier or mixer and a combiner or adder 9'. The function of the modulator of the first transmission path 30' in Fig. 3 is identical to the function of the modulator in Fig. 2. The electrical output signal of the modulator having the plurality of odd numbered subcarriers is illustrated in Fig. 3 in a simplified manner at the output of the combiner 9'.

The output signal of the modulator is fed to an electrical-to-optical converter 10'. The converter is configured to generate an optical signal having the first polarization (i.e., TE mode). In Fig. 3, this is implemented by using a modulator (here: a MZI) driven by a polarized light from an optical light source 11 (here: a laser). By means of a polarization beam splitter 31, the light of the light source 11 is split into two beams having orthogonal polarizations, i.e. the first polarization (TE mode) and the second polarization (TM mode). The light beam having the first polarization (TE mode) is used to drive the MZI 10' of the first transmission path 30', whereas the light beam having the second polarization (TM mode) is used to drive the MZI 10" of the second transmission path 30".

Optionally, an optical filter 12' is provided, which may remove one sideband and/or the optical carrier from the optical signal having the first polarization.

The second transmission path 30" analogously processes the outputs assigned to the even numbered channels. After multiplication and signal combining, the out-put signal of the modulator of the second transmission path 30" is fed to the MZI 10" driven by the light beam having the second polarization (TM mode). Optionally, also an optical filter 12" may be provided.

The optical output signals of both transmission paths 30' and 30" are optically combined by means of an optical combiner 32 (e.g., a polarization beam combiner). The resulting optical signal having the two orthogonal polarizations (TE mode for the odd numbered carriers and TM mode for the even numbered carriers) is illustrated in a simplified manner above the fiber link 1 in Fig. 3.

The receiver of the system using two polarizations for the OFDM carriers in Fig. 3 is identical to the receiver in Fig. 2 without using different polarizations, i.e., the receiver is a conventional receiver for an optical OFDM system without the need to adapt the receiver to the usage of two polarizations.

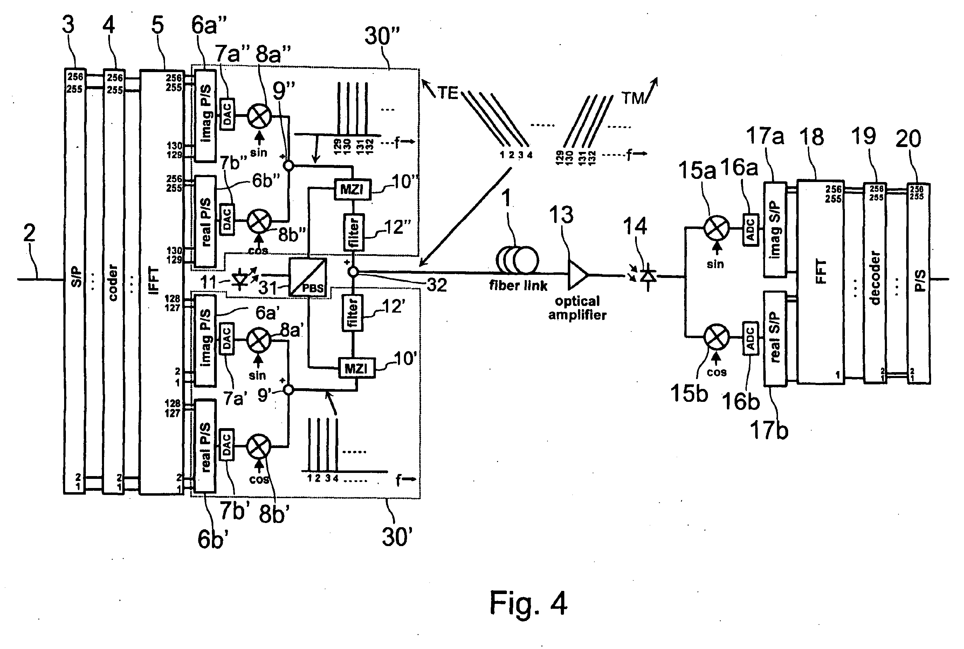

Fig. 4 illustrates a second embodiment of a transmitter for an OFDM fiber optics transmission system according to the invention. Figurative elements in Figs. 3 and 4 being denoted by the same reference signs are basically the same.

The transmitter in Fig. 4 differs from the transmitter in Fig. 3 that the transmitter in Fig. 4 is configured to generate an optical OFDM signal, wherein the lower numbered subcarriers (here: subcarriers 1 to 128) have a first polarization (TE mode) and higher numbered subcarriers (here: subcarriers 129 to 256) have a second polarization (TM mode). Such optical signal having two orthogonal polarizations is illustrated in a simplified manner above the fiber link 1 in Fig. 3.

In contrast to the embodiment in Fig. 3, in Fig. 4 the parallel outputs of the IFFT-unit 5 assigned to the lower numbered subcarriers 1 to 128 are fed into the first transmitter path 30' resulting in an optical signal having a first polarization (TE mode), whereas the parallel outputs of the IFFT-unit 5 assigned to the higher numbered subcarriers 129 to 256 are fed into the second transmitter path 30" resulting in an optical signal having a second polarization (TM mode).

## Claims

1. An optical Orthogonal Frequency Division Multiplexing OFDM transmitter (3, 4, 5, 30', 30", 32, 31, 11) for a fiber optics OFDM transmission system, the transmitter being configured to generate an optical OFDM signal, each subcarrier of the OFDM signal being at a different frequency and associated with a different frequency subchannel, at least some of the subcarriers being modulated, and the subcarriers being orthogonal to each other in the frequency domain,
**characterized in that**
each subcarrier in a first group of the subcarriers has a first polarization and each subcarrier in a second group of the subcarriers has a second polarization different from the first polarization.

2. The transmitter (3, 4, 5, 30', 30", 32, 31, 11) according to claim 1, wherein the first and second polarizations are orthogonal polarizations.

3. The transmitter (3, 4, 5, 30', 30", 32, 31, 11) according to claim 1, wherein the transmitter comprises:
- means (5) for performing an inverse fast Fourier-transform generating a plurality of parallel digital signals, with a first group of the parallel digital signals being assigned to the first group of the subcarriers and a second group of the parallel digital signals being assigned to the second group of the subcarriers;
- first means (6a', 6b', 7a', 7b', 8a', 8b', 9') for generating a first analog signal based on the first group of the parallel digital signals;
- a first electrical-to-optical converter (10') receiving the first analog signal and configured to generate a first optical signal;
- second means (6a", 6a", 7a", 7b", 8a", 8b", 9") for generating a second analog signal based on the second group of the parallel digital signals; and
- a second electrical-to-optical converter (10") receiving the second analog signal and configured to generate a second optical signal.

4. The transmitter (3, 4, 5, 30', 30", 32, 31, 11) according to claim 3, wherein the first optical signal has the first polarization and the second optical signal has the second polarization.

5. The transmitter (3, 4, 5, 30', 30", 32, 31, 11) according to claim 1, wherein the polarization of the subcarriers alternate with increasing frequency.

6. The transmitter (3, 4, 5, 30', 30", 32, 31, 11) according to claim 1, wherein the frequencies of the first group of the subcarriers are lower than the frequencies of the second group of the subcarriers.

7. A transmission system comprising a transmitter (3, 4, 5, 30', 30", 32, 31, 11) according to claim 1.

8. A fiber optics Orthogonal Frequency Division Multiplexing OFDM signal, each subcarrier of the OFDM signal being at a different frequency and associated with a different frequency subchannel, at least some of the subcarriers being modulated, and the subcarriers being orthogonal to each other in the frequency domain,
**characterized in that**
each subcarrier in a first group of the subcarriers has a first polarization and each subcarrier in a second group of the subcarriers has a second polarization different from the first polarization.

9. A method for generating a fiber optics Orthogonal Frequency Division Multiplexing OFDM signal, each subcarrier of the OFDM signal being at a different frequency and associated with a different frequency subchannel, at least some of the subcarriers being modulated, and the subcarriers being orthogonal to each other in the frequency domain,
**characterized in that**
each subcarrier in a first group of the subcarriers has a first polarization and each subcarrier in a second group of the subcarriers has a second polarization different from the first polarization.

## Patentansprüche

1. Ein optischer Sender (3, 4, 5, 30', 30", 32, 31, 11) in Orthogonal-Frequenzmultiplex-Technik, OFDM, für ein faseroptisches OFDM-Übertragungssystem, wobei der Sender konfiguriert ist, um ein optisches OFDM-Signal zu erzeugen, wobei jeder Hilfsträger des OFDM-Signals eine verschiedene Frequenz hat und mit einem verschiedenen Frequenz-Subkanal assoziiert ist, wobei mindestens einige der Hilfsträger moduliert sind, und wobei die Hilfsträger im Frequenzbereich orthogonal zueinander angeordnet sind,
**dadurch gekennzeichnet, dass**
jeder Hilfsträger in einer ersten Gruppe von Hilfsträger eine erste Polarisierung und jeder Hilfsträger in einer zweiten Gruppe von Hilfsträgern eine zweite Polarisierung aufweist, welche sich von der ersten Polarisierung unterscheidet.

2. Der Sender (3, 4, 5, 30', 30", 32, 31, 11) nach Anspruch 1, wobei die erste und die zweite Polarisierung orthogonale Polarisierungen sind.

3. Der Sender (3, 4, 5, 30', 30", 32, 31, 11) nach Anspruch 1, wobei der Sender umfasst:
- Mittel (5) zum Ausführen einer inversen Fast-Fourier-Transformation, welche eine Vielzahl von parallelen Digitalsignalen erzeugt, wobei eine erste Gruppe der parallelen Digitalsignale der ersten Gruppe von Hilfsträgern und eine zweite Gruppe der parallelen Digitalsignale der zweiten Gruppe von Hilfsträgern zugewiesen wird;
- erste Mittel (6a', 6b', 7a', 7b', 8a', 8b', 9') zum Erzeugen eines ersten Analogsignals auf der Basis der ersten Gruppe der parallelen Digitalsignale;
- einen ersten Elektrisch/Optisch-Wandler (10'), welcher das erste Analogsignal empfängt und konfiguriert ist, um ein erstes optisches Signal zu erzeugen,
- zweite Mittel (6a", 6a", 7a", 7b", 8a", 8b", 9") zum Erzeugen eines zweiten Analogsignals auf der Basis der zweiten Gruppe der parallelen Digitalsignale; und
- einen zweiten Elektrisch/Optisch-Wandlar (10"), welcher das zweite Analogsignal empfängt und konfiguriert ist, um ein zweites optisches Signal zu erzeugen.

4. Der Sender (3, 4, 5, 30', 30", 32, 31, 11) nach Anspruch 3, wobei das erste optische Signal die erste Polarisierung und das zweite optische Signal die zweite Polarisierung aufweist.

5. Der Sender (3, 4, 5, 30', 30", 32, 31, 11) nach Anspruch 1, wobei die Polarisierung der Hilfsträger mit zunehmender Frequenz wechselt.

6. Der Sender (3, 4, 5, 30', 30", 32, 31, 11) nach Anspruch 1, wobei die Frequenzen der ersten Gruppe der Hilfsträger niedriger sind als die Frequenzen der zweiten Gruppe der Hilfsträger.

7. Ein Übertragungssystem mit einem Sender (3, 4, 5, 30', 30", 32, 31, 11) nach Anspruch 1.

8. Ein faseroptisches Signal in Orthogonal-Frequenzmultilex-Technik, OFDM, wobei jeder Hilfsträger des OFDM-Signals eine verschiedene Frequenz hat und mit einem verschiedenen Frequenz-Subkanal assoziiert ist, wobei mindestens einige der Hilfsträger moduliert sind, und wobei die Hilfsträger im Frequenzbereich orthogonal zueinander angeordnet sind,
**dadurch gekennzeichnet, dass**
jeder Hilfsträger in einer ersten Gruppe von Hilfsträgern eine erste Polarisierung und jeder Hilfsträger in einer zweiten Gruppe von Hilfsträgern eine zweite Polarisierung aufweist, welche sich von der ersten Polarisierung unterscheidet.

9. Ein Verfahren zum Erzeugen eines faseroptischen Signals in Orthogonal-Frequenzmultilex-Technik, OFDM, wobei jeder Hilfsträger des OFDM-Signals eine verschiedene Frequenz hat und mit einem verschiedenen Frequenz-Subkanal assoziiert ist, wobei mindestens einige der Hilfsträger moduliert sind, und wobei die Hilfsträger im Frequenzbereich orthogonal zueinander angeordnet sind,
**dadurch gekennzeichnet, dass**
jeder Hilfsträger in einer ersten Gruppe von Hilfsträgern eine erste Polarisierung und jeder Hilfsträger in einer zweiten Gruppe von Hilfsträgern eine zweite Polarisierung aufweist, welche sich von der ersten Polarisierung unterscheidet.

## Revendications

1. Émetteur à multiplexage par répartition orthogonale de la fréquence OFDM (3, 4, 5, 30', 30", 32, 31, 11) pour un système de transmission OFDM à fibre optique, l'émetteur étant configuré pour générer un signal optique OFDM, chaque sous-porteuse du signal OFDM étant à une fréquence différente et étant associée à une voie intermédiaire à fréquence différente, au moins l'une des sous-porteuses étant modulée et les sous-porteuses étant orthogonales les unes aux autres dans le domaine des fréquences,
**caractérisé en ce que**
chaque sous-porteuse dans un premier groupe de sous-porteuses a une première polarisation et chaque sous-porteuse dans un second groupe de sous-porteuses a une seconde polarisation différente de la première polarisation.

2. Émetteur (3, 4, 5, 30', 30", 32, 31, 11) selon la revendication 1, dans lequel la première et la seconde polarisations sont des polarisations orthogonales.

3. Émetteur (3, 4, 5, 30', 30", 32, 31, 11) selon la revendication 1, dans lequel l'émetteur comprend :
- moyens (5) pour effectuer une transformée de Fourier rapide inverse générant une pluralité de signaux numériques parallèles, un premier groupe de signaux numériques parallèles étant assigné au premier groupe de sous-porteuses et un second groupe de signaux numériques parallèles étant assigné au second groupe de sous-porteuses ;
- premiers moyens (6a', 6b', 7a', 7b', 8a', 8b', 9') pour générer un premier signal analogique sur la base du premier groupe de signaux numériques parallèles ;
- un premier convertisseur électrique-optique (10') recevant le premier signal analogique, configuré pour générer un premier signal optique ;
- seconds moyens (6a', 6b', 7a', 7b'. 8a', 8b', 9') pour générer un second signal analogique sur la base du second groupe de signaux numériques parallèles ; et
- second convertisseur électrique-optique (10") recevant le second signal analogique, configuré pour générer un second signal optique.

4. Émetteur (3, 4, 5, 30', 30", 32, 31, 11) selon la revendication 3, dans lequel le premier signal optique a la première polarisation et le second signal optique a la seconde polarisation.

5. Émetteur (3, 4, 5, 30', 30", 32, 31, 11) selon la revendication 1, dans lequel la polarisation des sous-porteuses alterne lorsque la fréquence augmente.

6. Émetteur (3, 4, 5, 30', 30", 32, 31, 11) selon la revendication 1, dans lequel les fréquences du premier groupe de sous-porteuses sont inférieures aux fréquences du second groupe de sous-porteuses.

7. Système de transmission comprenant un émetteur (3, 4, 5, 30', 30", 32, 31, 11) selon la revendication 1.

8. Signal à multiplexage par répartition orthogonale de la fréquence OFDM à fibre optique, chaque sous-porteuse du signal OFDM étant à une fréquence différente et étant associée à une voie intermédiaire à fréquence différente, au moins l'une des sous-porteuses étant modulée et les sous-porteuses étant orthogonales les unes aux autres dans le domaine des fréquences,
**caractérisé en ce que**
chaque sous-porteuse dans un premier groupe de sous-porteuses a une première polarisation et chaque sous-porteuse dans un second groupe de sous-porteuses a une seconde polarisation différente de la première polarisation.

9. Procédé pour générer un signal à multiplexage par répartition orthogonale de la fréquence OFDM à fibre optique, chaque sous-porteuse du signal OFDM étant à une fréquence différente et étant associée à une voie intermédiaire à fréquence différente, au moins l'une des sous-porteuses étant modulée et les sous-porteuses étant orthogonales les unes aux autres dans le domaine des fréquences,
**caractérisé en ce que**
chaque sous-porteuse dans un premier groupe de sous-porteuses a une première polarisation et chaque sous-porteuse dans un second groupe de sous-porteuses a une seconde polarisation différente de la première polarisation.
